# EUROPÄISCHE PATENTANMELDUNG

(11) **EP 0 878 887 A2**
(43) Veröffentlichungstag der Anmeldung: **18.11.1998**
(21) Anmeldenummer: 98104528.9
(22) Anmeldetag: 13.03.1998
(51) Int. Cl.: H02B 1/30

(54) **Einer Schaltanlage zugeordneter Schalt- und/oder Steuerschrank**

(30) Priorität: 14.05.1997 DE 19720091
(71) Anmelder: ABB PATENT GmbH, 68309 Mannheim (DE)
(72) Erfinder: Fabian, Wolfgang, 68219 Mannheim (DE)
(74) Vertreter: Rupprecht, Klaus, Dipl.-Ing.

(57) **Zusammenfassung**

Ein Schalt- und/oder Steuerschrank (10), der einer vorzugsweise Hochspannungsschaltanlage zugeordnet ist, besitzt eine Fronttür (13) und ggf. auch eine Frontabdeckung (12), die miteinander die Frontwandung bilden. Die Tür (13) und die Frontabdeckung (12) sind nach vorn hin konvex ausgebildet, wobei der Bogenmittelpunkt des Radius (R) auf einer vertikalen Linie (M-M) liegt.

## Beschreibung

Die Erfindung betrifft einen einer Schaltanlage zugeordneten Schall- und/oder Steuerschrank, mit wenigstens einer vorderen Tür, die die vordere Front teilweise verschließt, und mit einer Frontabdeckung, die mit der Tür die Frontwandung bildet.

Derartige Schall- und/oder Steuerschränke sind an sich bekannt. Sie besitzen eine Tür, die - bei Niederspannungsschaltanlagen oder Mittelspannungsschaltanlagen - die vordere Front vollständig überdeckt; Steuerschränke bei Hochspannungsschaltanlagen können eine Tür aufweisen, die einen Teil der Vorderfront einnimmt; der übrige Bereich ist von einer Frontabdeckung abgedeckt.

Die Tür und die Frontabdeckung sind aus gleichem Material, normalerweise aus Metallblech. Die Fläche der vorderen Frontwandung ist eben.

Aufgabe der Erfindung ist es, einen Schall- und/oder Steuerschrank zu schaffen, der einerseits auf einfachere Weise hergestellt werden kann und darüber hinaus auch ästhetisch ansprechender gestaltet ist.

Diese Aufgabe wird erfindungsgemäß dadurch gelöst, daß die Tür und/oder die Frontabdeckung, die die Frontwandung miteinander oder einzeln bilden, nach vorne hin konvex ausgebildet ist.

Erfindungsgemäß also ist die vordere Frontabdeckung nicht eben, sondern zum Betrachter hin konvex gebogen. Dadurch kann ein Zylinderbogen gebildet sein, dessen Mittelachse vertikal oder horizontal verlaufen kann.

Gemäß einer besonders vorteilhaften Ausgestaltung der Erfindung kann das Türblatt der Tür aus Glas oder klar transparentem Kunststoff hergestellt sein, das bzw. der auf der Innenseite teilweise mit Farbe beschichtet ist. Bei der Verwendung von Glas mit entsprechender Festigkeit oder Kunststoff ist zumindest der Bereich der Frontabdeckung, der durch die Tür gebildet ist, klar spiegelnd, was den optisch ansprechenden Eindruck verbessert.

Die Beschichtung mit Farbe ist so angeordnet, daß ein Bereich oder Fenster freibleibt, durch welches hinter der Tür befindliche Anzeige- oder Bedienelemente beobachtet werden können.

Am Rahmen des Schalt- und/oder Steuerschrankes, gegen den das Türblatt anschlägt, können Dichtungen, vorzugsweise Lippendichtungen vorgesehen sein, so daß eine Abdichtung zum Inneren des Schalt- und/oder Steuerschrankes erzielt wird.

Die Anordnung kann so getroffen sein, daß die Frontwandung durch die gesamte Tür gebildet wird, d. h., daß die Höhe und Breite der Tür der Höhe und Breite des Schalt- und/oder Steuerschrankes entsprechen. Es besteht auch die Möglichkeit, die Frontwandung teilweise durch eine Frontabdeckung und teilweise durch die Tür zu bilden; beide, Tür und Frontabdeckung, sind mit der Bogenform ausgebildet.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Aufsicht auf einen Steuerschrank für eine Hochspannungsschaltanlage,
- Fig. 2: eine Schnittansicht gemäß Schnittlinie II-II, und
- Fig. 3: eine Detailansicht, in dem das Scharnier mit der Tür dargestellt ist.

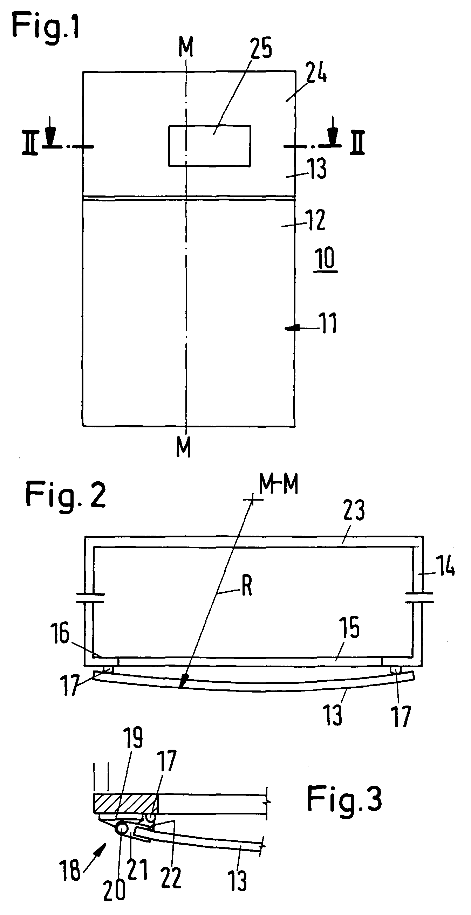

Der Steuerschrank 10, der in Fig. 1 dargestellt ist, besitzt eine Frontwandung 11, die im unteren Bereich durch eine Frontabdeckung 12 und im oberen Bereich durch eine Tür 13 gebildet ist. Die Frontabdeckung 12 ist aus Stahlblech hergestellt und die Tür 13 bei der in Fig. 1 dargestellten Ausführung aus Glas.

Der Steuerschrank gemäß Fig. 1 besitzt ein geschlossenes Schrankgehäuse 14, welches nach vorn hin eine Öffnung 15 im Bereich der Tür 13 aufweist, die mittels der Tür 13 abgedeckt ist. Wie aus Fig. 2 ersichtlich ist, ist am vorderen Türrahmen 16 eine umlaufende Dichtung 17 vorgesehen, gegen die die Tür 13 anschlägt. Die Fig. 3 zeigt beispielhaft ein Scharnier 18, welches ein feststehendes Teil 19 und ein damit mittels eines Gelenkes 20 gelenkig verbundenes gabelförmiges Halteelement 21 aufweist, in dessen Gabelöffnung 22 der in Fig. 1, 2 oder 3 links befindliche Rand der Tür 13 eingesteckt und darin in nicht näher dargestellter Weise befestigt ist. Der rechts befindliche Rand der Tür 13 ist mittels einer nicht näher dargestellten Schloßanordnung gegen den Rahmen 16 verschließbar.

Die Tür 13 sowie die Frontwand 12 sind zylinderbogenförmig, d. h. konvex zum Betrachter, also nach vorn hin gebogen, wobei der Radius R beträgt, dessen Mittelpunkt auf einer vertikal verlaufenden Linie M-M liegt, die bei der Ausführung gemäß Fig. 2 deutlich hinter der Rückwand 23 des Steuerschrankes 10 liegt.

Die aus Glas hergestellte Tür 13 besitzt auf ihrer Rückwand eine Farbbeschichtung 24, die eine rechteckförmige Aussparung 25 umgibt, so daß durch die klar transparente Aussparung hinter der Tür befindliche Bedien- und/oder Anzeigeelemente beobachtbar sind. Es besteht natürlich auch die Möglichkeit, die gesamte Tür transparent zu lassen.

Anstatt Glas könnte für die Tür 13 auch ein klar transparenter Kunststoff verwendet werden, vorausgesetzt, der Kunststoff besitzt die ausreichende Schlagfestigkeit, was selbstverständlich auch für die Tür aus Glas gilt.

Der Steuerschrank 10 der Fig. 1 bis 3 wird vorzugsweise als Steuerschrank für eine Hochspannungsschaltanlage verwendet. Es besteht selbstverständlich auch die Möglichkeit, eine entsprechende Ausführung auch bei Schaltschränken für Mittel- und Niederspannungsanlagen vorzusehen. Daß dabei aus Gründen der Lichtbogenfestigkeit die Tür nicht aus Glas oder Kunststoff hergestellt werden kann, ändert nichts, vorausgesetzt, die dann aus Blech hergestellte Tür ist in gleicher Weise konvex nach vorn hin gebogen.

Der Bogenmittelpunkt des Zylinderbogens kann auch auf einer horizontalen Linie liegen.

Der Mittelpunkt kann auch ein einziger Punkt sein, so daß die Tür oder/und die Frontwandung einen Kugelabschnitt bildet.

## Patentansprüche

1. Einer Schaltanlage zugeordneter Schalt- und/oder Steuerschrank, mit wenigstens einer vorderen Tür, die die vordere Front zumindest teilweise verschließt und ggf. mit einer Frontabdeckung, die - falls vorhanden - mit der Tür die Frontwandung bildet, dadurch gekennzeichnet, daß die Tür und die Frontabdeckung nach vorn hin konvex ausgebildet sind.

2. Schaltschrank nach Anspruch 1, dadurch gekennzeichnet, daß die konvexe Form durch einen Zylinderbogen gebildet ist, dessen Bogenmittelpunkt auf einer vertikalen Linie liegt.

3. Schalt- und/oder Steuerschrank nach Anspruch 1 oder 2, dadurch gekennzeichnet, daß das Türblatt der Tür (13) aus Glas oder klar transparentem Kunststoff hergestellt ist.

4. Schalt- und/oder Steuerschrank nach Anspruch 3, dadurch gekennzeichnet, daß das Glas oder der klar transparente Kunststoff auf der Innenseite mit Farbe beschichtet ist.

5. Schalt- und/oder Steuerschrank nach Anspruch 4, dadurch gekennzeichnet, daß die Farbbeschichtung einen Teilbereich (25) freiläßt, so daß durch diesen Teilbereich (25) hinter der Tür befindliche Anzeige und/oder Bedienelemente und dgl. beobachtbar sind.

6. Schalt- und/oder Steuerschrank nach einem der vorherigen Ansprüche, dadurch gekennzeichnet, daß das Türblatt im geschlossenen Zustand gegen am Türrahmen angebrachte Dichtungen angedrückt ist.
